(19) Europäisches Patentamt / European Patent Office / Office européen des brevets

(11) **EP 3 112 608 B1**

(12) **EUROPEAN PATENT SPECIFICATION**

(45) Date of publication and mention
of the grant of the patent:
**12.08.2020 Bulletin 2020/33**

(51) Int Cl.:
*F01D 17/14* *(2006.01)*     *F01D 17/16* *(2006.01)*
*F02B 37/24* *(2006.01)*

(21) Application number: **16177022.7**

(22) Date of filing: **29.06.2016**

(54) **TURBOCHARGER SYSTEM AND CONTROL METHOD**

TURBOLADERSYSTEM UND STEUERUNGSVERFAHREN

SYSTÈME DE TURBOCOMPRESSEUR ET MÉTHODE DE CONTRÔLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2015 IT UB20151751**

(43) Date of publication of application:
**04.01.2017 Bulletin 2017/01**

(73) Proprietor: **FPT Industrial S.p.A.
10156 Torino (IT)**

(72) Inventor: **D'EPIRO, Clino
10091 ALPIGNANO (IT)**

(74) Representative: **Franzolin, Luigi et al
Studio Torta S.p.A.
Via Viotti, 9
10121 Torino (IT)**

(56) References cited:
**DE-A1-102009 004 890     DE-A1-102009 012 130
DE-A1-102012 022 510**

## Description

### Field of the invention

The present invention relates to the field of variable geometry turbines in turbocharger systems used for supercharging internal combustion engines.

### Prior art

In the field of variable geometry turbochargers, two basic types are known, namely the "pivoting vanes" type, with adjustable vanes and the "sliding wall" type, with a sliding wall.

An example of a turbine with sliding wall is given in DE102008052088, while an example of turbine with pivoting vanes is given in JP2010156220.

The pivoting vanes type includes stator vanes arranged along a circumference, each of them being rotatable about a respective axis of rotation. It is usually appreciated because at a small flow rate it is able to guarantee a good efficiency of the turbine by orienting the angle of incidence of the gas flow on the rotor blades. However, this orientation can be optimal only with small opening ranges around the target angle.

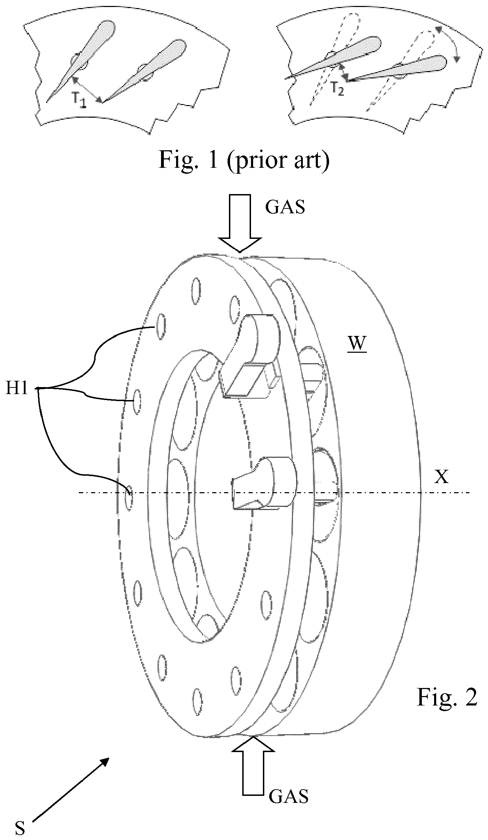

In fact, the orientation of the vanes influences both the orientation of the flow and the efflux section of the scroll. Figure 1 of the prior art shows two different operating conditions wherein, beside a different angle of the vanes, the efflux sections T1 and T2 are clearly different. Therefore, the efflux section cannot be controlled regardless of the efflux orientation.

Because of such interdependence, the efficiency of the turbine is good within a limited opening range, with steep falls outside of the target point, which is usually set in an intermediate operating condition.

The sliding wall type is the first turbine that stood out in the industrial field thanks to a reliability higher than the one of the pivoting vanes type. The operating principle is totally different from the one of the pivoting vanes. The sliding wall comprises a stator formed by vanes arranged along a circumference, analogously to the pivoting vanes, but these vanes are fixed and the variations of the efflux section occur by means of the axial movement of a cylindrical wall - called sliding wall - which surrounds the stator vanes, so as to define an annular nozzle whose cross section is a function of the axial position of the sliding wall, so that it is possible to reduce the efflux section. If compared to the pivoting vanes type, it has lower fluid losses, but it cannot control the angle of incidence of the gas flow with respect to the rotor blades. In other words, any operating condition of the internal combustion engine corresponds to a flow rate of the exhaust gas, but in the pivoting vanes type, the turbine balance is obtained by adjusting the orientation of the stator vanes or, in the sliding wall type, by adjusting the axial position of the sliding wall, thereby obtaining an angle of incidence which is often not optimal for the energy exchange between the stator and the rotor of the turbine, thus originating dissipative phenomena that result in a loss of efficiency of the entire system. 5 percentage points of efficiency of the turbine generally correspond to 1 percentage point of efficiency of the entire system comprising the turbine and the related internal combustion engine.

An innovative solution is proposed in DE102009012130, wherein a cylindrical sliding wall comprises annular cylindrical seats housing the rotor blades, evenly spaced between them and axially fixed. Each vane has a cylindrical base complementary with a seat of the wall, which allows the vane to rotate about its axis regardless of the axial position of the sliding wall, thus penetrating more or less in the aforesaid seats. This allows an adjustment of the efflux section by axially sliding the wall, and an adjustment of the flow incidence on the stator vanes by varying the inclination of the rotor blades.

This solution is not optimal, because when the wall reaches a smaller efflux section, turbulences are formed inside said seats, thus losing the efficiency obtained by the double adjustment.

### Summary of the invention

Therefore, the object of the present invention is to overcome the drawbacks of the prior art by providing a turbocharger system according to claim 1 and a method for controlling a turbocharger system according to claim 7.

As explained in the following, said turbine is of the radial centripetal type and defines an axis of symmetry.

In particular, the stator vanes are orientable and, at the same time, an axially sliding wall determines an efflux section of the turbine stator, also called distributor.

Preferably, said stator vanes are shaped and evenly spaced, so that their change of orientation does not remarkably vary an efflux section of said stator. Therefore, the variation of the efflux section of the stator is exclusively obtained by axially sliding the sliding wall. "Remarkably" means that, by changing the angle of the vanes between a minimum and maximum operating angle relative to a radial direction of the rotor, the variation of the efflux section is less than 10%, and preferably less than 5%.

Such a system of vanes defines what is called, in the turbine terminology, a "low solidity" row.

According to the present invention, the sliding wall, similarly to the prior art, includes annular cylindrical seats with an axis parallel to the turbine axis, but the stator vanes are attached to the seats of the wall by means of substantially cylindrical bushings that are fixed with the wall in the axial direction and can rotate around their axis of rotation. These bushings comprise a slot complementary with the stator vanes, and therefore only the stator vanes are axially fixed, fitting in complementary slots of the bushings during the axial sliding of the sliding wall.

Advantageously, no turbulence occurs within the turbine, since the seats in the sliding wall are always closed by the bushings, regardless of the axial position of the sliding wall.

A further object of the present invention is a vehicle equipped with a turbocharger system according to the present invention.

The claims describe preferred variants of the invention and form an integral part of the present description.

Brief description of the figures

Further objects and advantages of the present invention will become clear from the following detailed description of an embodiment (and of its variants) and from the attached data, given to merely illustrative and not limitative purposes, in which:

Figure 1 shows a known effect relating to the orientation of the vanes of a pivoting vanes turbine according to the prior art,

Figure 2 shows an illustrative example of a turbine stator according to the present invention comprising, for convenience of representation, only two of a plurality of vanes;

Figure 3 shows an enlargement of Figure 2 without a part;

Figure 4 shows two components of the previous Figures;

Figure 5 shows an exploded view of the example of Figures 2 and 3;

Figures 6-10 and 6a-10a show different operating conditions of the turbine object of the present invention according to respective axial and side views of the turbine, to implement a preferred control method of the same.

The same numbers and the same reference letters in the figures identify the same elements or components.

In the present description, the term "second" component does not imply the presence of a "first" component. These terms are, in fact, only used for clarity's sake and are not intended as limiting.

Detailed description of embodiments

The turbine T of the present invention comprises a stator S having stator vanes V, arranged along a circumference CF in a known way, orientable, namely able to rotate with respect to a respective axis of rotation $X_i$ perpendicular to a plane identified by the above circumference CF, so as to orient the angle of incidence of the exhaust gas flow GAS on the rotor blades J that are radially arranged, as shown in the figures. Each vane may be shaped in a known way.

The set of stator vanes V is usually called "distributor", because it defines a centripetal annular nozzle for the exhaust gases that must be conveyed on the rotor blades. According to the present invention, the turbine also includes an axially sliding wall W, namely sliding along the axis of axial symmetry X of the turbine to vary the overall efflux section regardless of the orientation of the stator vanes.

The sliding wall can thus slide between a throttling position of the efflux section (closing) and a fully open position (opening) of the efflux section.

The throttling position (closing) still allows the passage, albeit minimal, of exhaust gases GAS, and therefore it should not be considered an absolute closing position.

The axis of axial symmetry X of the entire turbine is clearly parallel to the rotation axes $X_i$ of the vanes V.

The sliding wall W has a cylindrical shape defined by a thick annular wall and comprises a number of axial and cylindrical or quasi-cylindrical hollow seats H, in a number equal to the vanes V, each having an axis of symmetry coinciding with the axis of rotation $X_i$ of the vanes V and having a diameter of the vanes at least equal to the larger transverse extension of the vanes. Therefore, the wall, sliding axially, encompasses the vanes regardless of their orientation.

In other words, the turbine rotor is surrounded by the inner surface of the cylindrical wall that defines the sliding wall.

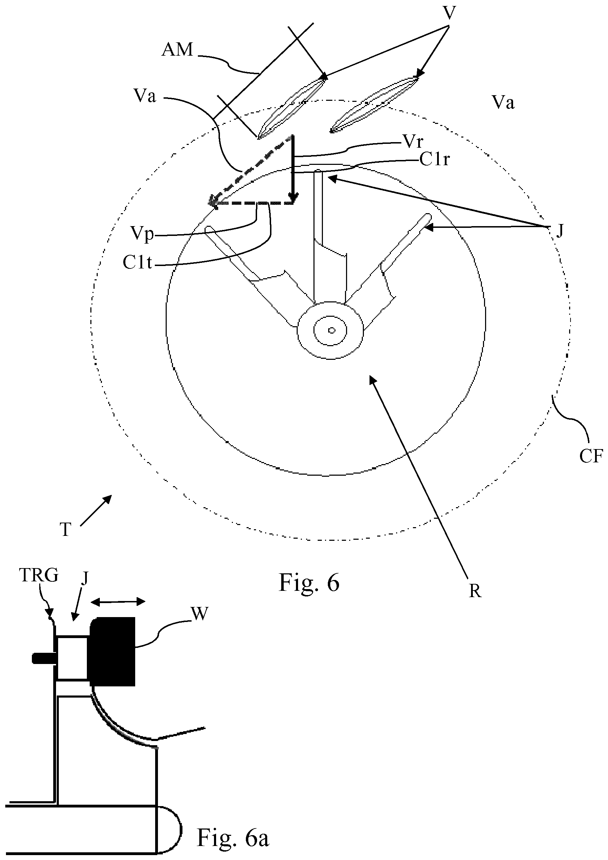

Figure 6, which will be later described in more detail, schematically shows a pair of vanes V. The larger transverse extension of a vane is indicated by the symbol AM.

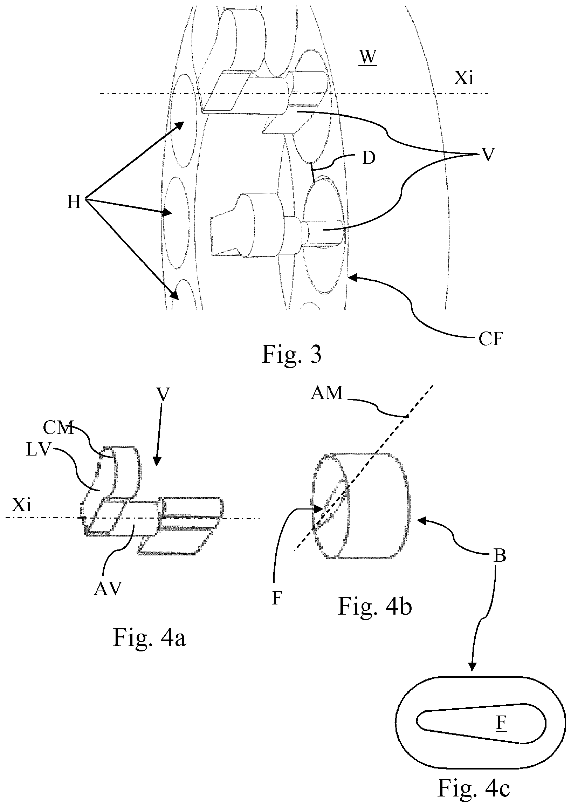

As shown in Figure 3, the vanes are preferably evenly spaced by a distance D, preferably greater than zero, along the circumference CF. It is clear that the hollow seats H can also interpenetrate each other, thus having a negative mutual distance D, in view of the small angle of rotation of the vanes. In other words, any such interpenetration is not a hindrance to the rotation of the vanes in the turbine normal operating conditions.

The sliding wall at least partially encompasses the vanes when it is not in the fully open position, namely with the maximum efflux section of the turbine, to avoid the formation of turbulences.

In relation to the length in the axial direction of the wall W, the hollow seats H can be blind or through with respect to the above axial directions $X_i$.

To improve the fluid dynamic characteristics of the turbine, it comprises bushings B, externally shaped like a right prism, complementary with each of said hollow seats H having

- a circular base, when the distance D is from zero to greater than zero,
- an elliptical base or the like, when the distance D is negative, namely when the hollow seats mutually interpenetrate. By way of example see Figure 4c, which shows a bushing in a plan view.

The base of each bushing B identifies a major axis, also indicated by AM, and a slot F whose shape is complementary with the one of a vane, so that a vane can slide inside the slot in an axial direction of the vane.

Each bushing B is rotatably associated with a hollow seat H to follow the rotation of the vanes even when they are partially or completely embedded in the wall of the sliding wall.

Each bushing B is axially fixed with respect to the sliding wall, thus sliding with it by covering or uncovering the stator vanes.

Therefore, the bushings fill any gaps between the vanes and the hollow seats of the wall, thus reducing the turbulence and optimizing the aerodynamic efficiency of the turbine. The vanes preferably have the shape of a right prism, for example an airfoil (base) as shown in the figures, but may also have different shapes of right prism, for example with a base having a different shape.

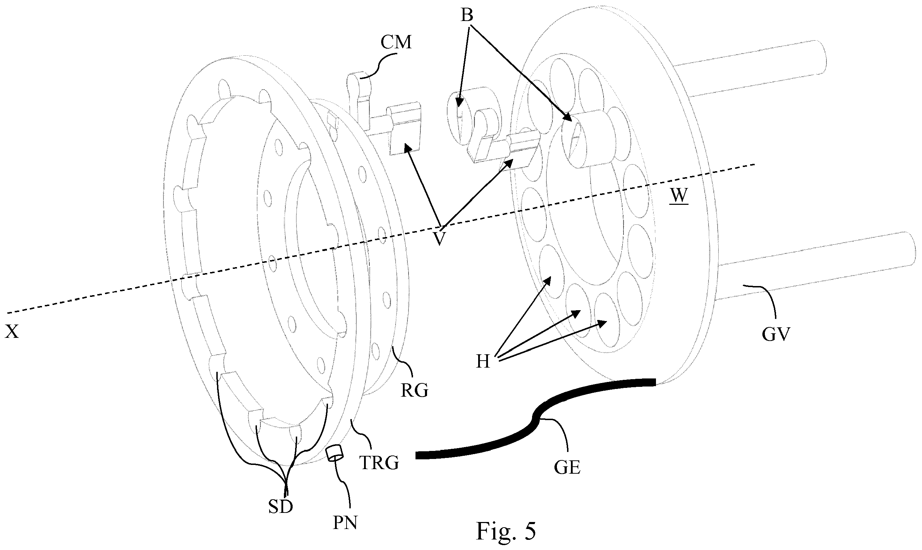

The control system of the vane orientation includes a shaft AV coaxial with the axis of rotation Xi of the relative vane, which can be in one piece with the relative vane or associated to the same by means of an irremovable graft. With reference to Figures 2 and 5, a support ring RG comprises a plurality of through holes HI, each of which, cooperating with a corresponding shaft AV, defines a rotation hinge of the respective vane V according to the respective axis of rotation Xi.

A crank LV is associated to the shaft AV, said crank finding a rotation fulcrum in the shaft.

The free end of the crank can be shaped as a tangential cam CM. Then, a rotatable ring TRG, axially fixed and rotatable with respect to said support ring RG, comprises suitable seats SD complementary with said cam, so that a rotation with respect to the symmetry axis X of said rotatable ring TRG causes a variation of the vane orientation V relative to their axis of rotation Xi.

In the figures, the cranks are approximately oriented radially outwards, so that the rotatable ring TRG includes radially inner seats SD. Conversely, if the cranks are approximately oriented radially inwards, the rotatable ring TRG has radially outer seats SD. The free end of the cranks may have a hole along the axis Xi and the rotatable ring TRG can be equipped with appropriate pins to be inserted into this hole for controlling the rotation of the vanes. In other words, the rotation of the vanes can be controlled in different, also already known, ways.

It is therefore evident that the turbine object of the present invention comprises at least

- first means W for controlling the efflux section of the turbine, independent from
- second means V, L, TRG for controlling the orientation of the gas incident on the rotor blades.

According to a first preferred variant of the invention, the operation of the vanes and of the sliding wall is controlled by means of two independent electric, hydraulic or pneumatic actuators.

According to a second preferred variant of the invention, a single electric or hydraulic or pneumatic actuator simultaneously controls the aforesaid first and second means.

For example, the wall can be fixed and the two rings, namely the support ring RG and the rotatable ring TRG, axially translate while the rotatable ring follows a tangentially peripheral helical guide GE, which imposes an axial translation but also a rotation about the axis X. Therefore, for example, a linear actuator can act on the support ring RG, while the ring TRG, rotatable relative to the support ring RG, is forced to follow a helical guide integral with the wall W, and thus to roto-translate.

According to a preferred variant of the invention, (see Figure 5) the sliding wall axially moves without rotating due to the axial guides GV, thus dragging one or more tangential and peripheral helical guides GE, interacting with a relative radial pin PN integral with the radial periphery of the rotatable ring TRG. This rotatable ring TRG is axially fixed, but rotatable with respect to the relative axis of rotation X, and therefore an axial displacement of the sliding wall W determines a rotation of the rotatable ring TRG.

It is clear that, according to the two aforesaid variants, the flow of gases passes through the one or more helical guides.

According to a further preferred variant of the invention, not shown, the rotatable ring TRG is axially fixed and rotatable with respect to the symmetry axis X and arranged on the side of the guides GV shown in Figure 5, and as previously stated, the helical guides, integral with the sliding wall W, engage a corresponding radial pin integral with the outer face of the rotatable ring. A purely axial translation of the sliding wall imposes a rotation to the rotatable ring TRG.

According to this preferred variant of the invention, the fixed ring RG is completely optional and besides, the control actuator is arranged on the side of the guides GV, and then in the opposite position to the annular flow of exhaust gas with respect to the sliding wall W. This allows an easy cooling of the control elements of the turbine with cooling means generally provided for the known turbines. Hereinafter it is described a control method under different operating conditions of the internal combustion engine to which the turbine is associated.

This method is described hereinafter with the aid of Figures 6-10, representing an axial view of the turbine with the relative velocity triangles and corresponding side vertex of each rotor blade.

According to the well-known equation of radial turbomachinery, the power P exchanged between the gas and the rotor is equal to

$$P = M \ (C2T - C1T)$$

The amount C2t is often neglected because of its relative smallness in the radial machines, thus simplifying the above equation. In fact, since it represents a loss of kinetic energy at the turbine outlet, the task of the designer is minimizing it in the design.

Then it follows the construction of the well-known velocity triangles, and in particular the detection of the relative velocity vector Vr.

In Figure 6, C1T and Vp perfectly overlap and Vr and Clr perfectly overlap.

Figure 6a shows a side view of the turbine and, in particular, the mutual position between the sliding wall and the stator vanes V.

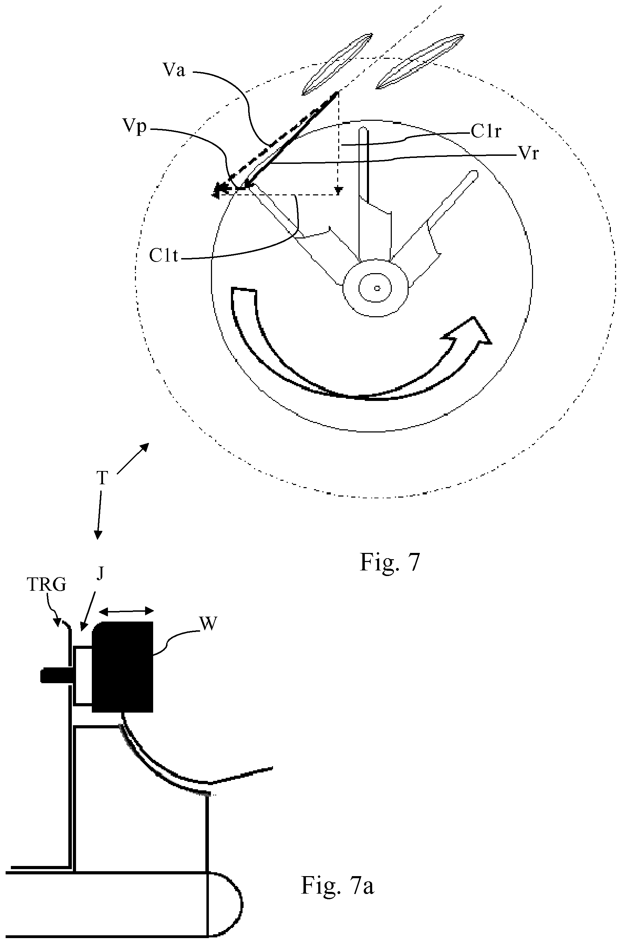

Figure 7 helps to understand the turbine control in an operating condition in which a sudden increase of torque is required to the internal combustion engine, which expresses low to medium power and a low or medium rpm, thus requiring a boost to the turbo.

According to the present invention, the processing means control the turbine to arrange the increase of the relative boost.

The wall W closes by reducing the efflux section (i.e. moves to the left in Figure 7a) to increase the pressure jump between the stator and the rotor of the turbine. The absolute velocity Va becomes larger, while the tangential velocity Vp is low because the turbine almost stops. The stator vanes V are very angled, namely almost perpendicular to the longitudinal development of a rotor blade, in order to have the maximum energy exchange between the gases and the rotor R, possibly at the expense of the turbine efficiency. Then, the gas efflux velocity Va is perpendicular or nearly perpendicular to the rotor blades J, thus violently impacting on them.

This operating condition might be implemented under any condition suddenly requiring a greater boost. The greater angle of the vanes and the closing of the sliding wall are inverse function of the rpm of the internal combustion engine, namely of the mass flow of exhaust gases. In other words, a sudden boost request leads to a closing of the sliding wall W and to a greater inclination of the vanes with respect to a radial direction of the rotor to hit perpendicularly the rotor blades.

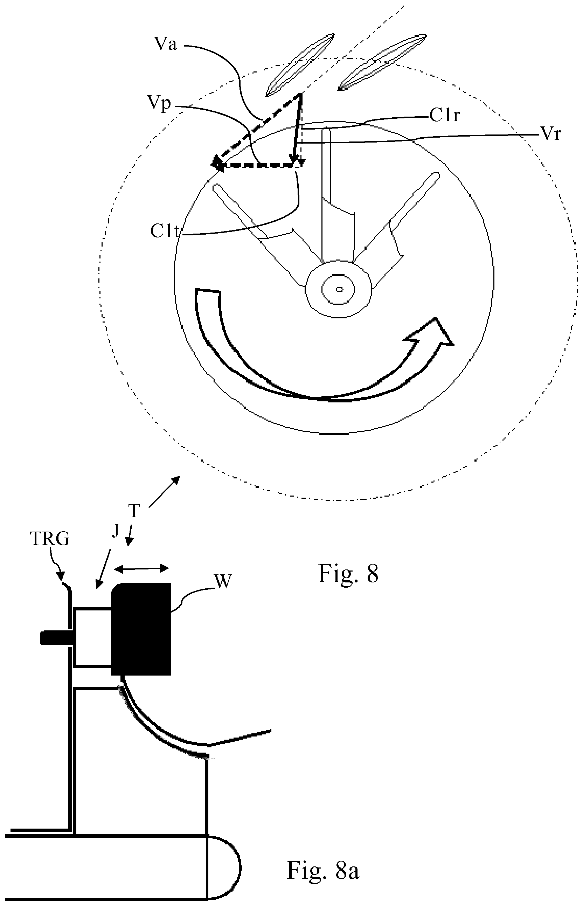

Figure 8 shows the turbine control in a steady-state operating condition of the internal combustion engine. When the motor has a steady-state condition and load, the turbine minimizes losses and increases its efficiency.

The wall W closes (see Figure 8a) leaving only the necessary section to maintain in the exhaust gases the energy required for the compression of the engine supply air without prejudice to the conversion efficiencies. The absolute velocity Va is therefore average compared to its range of variability. The tangential velocity Vp is instead medium-high, because the turbine is in a steady-state operating condition. The vanes V are oriented to maximize the aerodynamic efficiency of the turbine, which in turn ensures the minimum backpressure to the engine. The relative velocity Vr has a small angle, comprised between 0° and 8° with respect to a radial direction of the rotor, defining an angle of attack that ensures a good energy exchange without causing the rotor stall and any losses due to aerodynamic vortices.

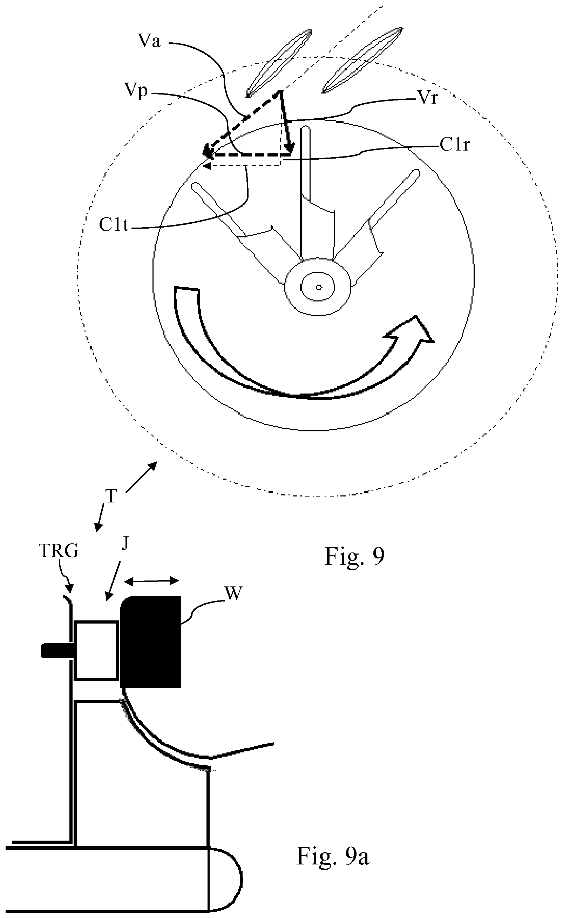

Figure 9 shows the turbine control in a condition in which the internal combustion engine rotates at a high number of revolutions, so that the turbine is in full swing too, and therefore it is necessary to limit the boost to avoid a damage to the turbine T due to the overspeed.

The sliding wall W (see Figure 9a) is in the open position to guarantee the minimum energy required for the compression of the engine supply air. Then the absolute velocity should be medium to low. The tangential velocity Vp of the rotor is instead high, because the turbine is in a steady-state operating condition. The vanes V are angled to obtain the maximum aerodynamic efficiency of the turbine, which in turn ensures the minimum backpressure to the engine, with the relative velocity Vr defining a zero or negative angle, preferably between 0° and -5°, with respect to a radial direction of the rotor. Said angle of attack still ensures a good energy exchange without stalling of the rotor blades and without losses due to aerodynamic vortices, but prevents an increase of the rotor velocity. In fact, if the rotor sped up, the tangential velocity Vp would increase, thus consequently increasing the negative angle of impact between the relative velocity Vr and the rotor blades J.

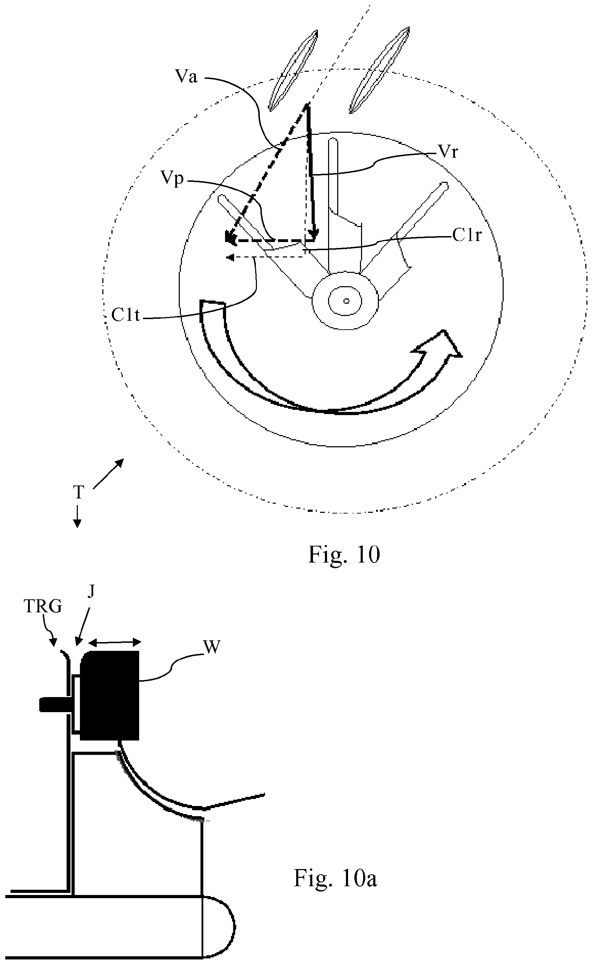

Figure 10 shows the turbine control in an engine brake mode.

When the engine is in the engine brake mode, the turbine simultaneously maximizes the boost and the backpressure to the engine, which contributes to the engine brake.

The sliding wall W (see Figure 10a) is brought into the closing position until reaching the minimum efflux section or a position such as not to create a backpressure exceeding a permissible threshold value, which generally is of 5-7 bar.

The absolute velocity Va thus becomes medium-high. The tangential velocity of the rotor Vp is instead high because the turbine is in a steady-state operating condition. The vanes J are oriented to obtain the maximum aerodynamic efficiency for the turbine in order to transfer the maximum possible energy to the corresponding compressor. The relative velocity Vr defines an angle zero or negative, preferably comprised between 0° and -5°, with a radial direction of the rotor, namely an angle of attack that still ensures a good energy exchange without stalling of the vanes and any losses due to aerodynamic vortices, but prevents the rotor velocity increase and its consequent damage. In fact, if the rotor sped up, the relative tangential velocity Vp would increase, thus consequently increasing the negative angle of impact between the relative velocity Vr and the rotor blades J.

The control of the turbine object of the present invention can be advantageously carried out by the control unit ECU, which controls the relative internal combustion engine. According to a preferred variant of the invention, the isentropic efflux velocity module is calculated using the known formula:

$$|v_a| = \sqrt{2\frac{k}{k-1}mRT_1\left[1-\left(\frac{p_2}{p_1}\right)^{\frac{k-1}{k}}\right]}$$

based on the upstream and downstream pressure and of the temperature upstream of the turbomachine.

For suitably orienting the stator vanes V it is necessary to know the tangential velocity of the end part of the rotor blades J, namely the velocity of rotation of the rotor, in order to define the aforesaid angles of the relative velocity Vr. According to a preferred variant of the invention, an rpm sensor, for example, a Hall effect sensor, allows to know the velocity of rotation of the turbine. According to another preferred variant, the velocity of rotation of the turbine is calculated indirectly by the compressor, the compressor wheel being connected and aligned with the turbine wheel. In fact, the pressure upstream and downstream of the compressor is generally measured at the intake manifold, it is known the mass of treated air as well as the temperature of the gas downstream of the compressor. Therefore, given the known geometric characteristics of the compressor, the velocity of rotation of the compressor and therefore of the turbine can be calculated according to known formulas. Once known these data, the optimum angle of the stator row can be calculated for imparting to the fluid, by changing the Va direction, an angle such as to fall e.g. under one of the aforesaid control conditions.

The present invention can be advantageously implemented a computer program that comprises coding means for the temperature upstream of the turbomachine.

For suitably orienting the stator vanes V it is necessary to know the tangential velocity of the end part of the rotor vanes J, namely the velocity of rotation of the rotor, in order to define the aforesaid angles of the relative velocity Vr. According to a preferred variant of the invention, an rpm sensor, for example, a Hall effect sensor, allows to know the velocity of rotation of the turbine. According to another preferred variant, the velocity of rotation of the turbine is calculated indirectly by the compressor, the compressor wheel being connected and aligned with the turbine wheel. In fact, the pressure upstream and downstream of the compressor is generally measured at the intake manifold, it is known the mass of treated air as well as the temperature of the gas downstream of the compressor. Therefore, given the known geometric characteristics of the compressor, the velocity of rotation of the compressor and therefore of the turbine can be calculated according to known formulas. Once known these data, the optimum angle of the stator row can be calculated for imparting to the fluid, by changing the Va direction, an angle such as to fall e.g. under one of the aforesaid control conditions.

The present invention can be advantageously implemented a computer program that comprises coding means for the implementation of one or more steps of the method, when this program is run on a computer. Therefore, it is intended that the scope of protection extend to said computer program and furthermore to computer-readable media comprising a recorded message, said computer-readable media comprising program-coding means for carrying out one or more of the method steps, when said program is run on a computer.

Variants of embodiments of the described non-limiting example are possible without departing from the scope of the present invention, comprising all the equivalent embodiments for a person skilled in the art.

From the above description, the person skilled in the art is able to implement the object of the invention without introducing any further structural detail. The elements and features shown in the various preferred embodiments, including the drawings, may be combined without leaving the scope of protection of the present application. What described in the part relating to the prior art is only necessary for a better understanding of the invention and is not a declaration of existence of what described. Furthermore, unless specifically excluded in the detailed description, what described in the part relating to the prior art can be considered in combination with the features of the present invention, thus forming an integral part of the present invention. None of the characteristics of the different variants is essential; therefore, the single characteristics of each preferred variant or drawing can be individually combined with the other described variants.

## Claims

1. A turbocharger system comprising

   - an internal combustion engine and a turbocharger comprising
   - a turbine guided by the exhaust gases of said internal combustion engine, wherein said turbine has a variable geometry, being of a centripetal radial type that defines an axis of symmetry (X) and comprises a rotor (R) equipped with corresponding rotor blades (J), which are arranged radially, and a stator (S) equipped with corresponding stator vanes (V), which are arranged circumferentially and radially and externally with respect to the rotor blades, and wherein said stator vanes (V) are orientable, and comprising an annular, cylindrical sliding wall coaxial to the stator, which slides axially for varying an efflux section of said stator vane turbine, wherein said sliding wall comprises a hollow seat (H) for each of said stator vanes (V), formed in the thickness of the sliding wall, to englobe at least partially said stator vanes during said sliding movement and wherein the turbocharger system comprises, in each of said hollow seats, a bushing (B), which has an outer shape complementary with said hollow seat (H) and is rotatably associated to said hollow seat, and wherein said bushing has an inner slot (F) having a shape complementary with one of said stator vanes (V) so that said vane may slide axially therein; the turbine further comprising first means for controlling an orientation of said stator vanes (V) and second means for controlling an axial position of said sliding wall and being **characterized in** comprising processing means configured to control said turbine such that in engine brake mode operation of the internal combustion engine the sliding wall (W) is controlled to reduce the efflux section and increase the backpressure of the internal combustion engine up to a predefined limit threshold, and the stator vanes (V) are oriented to obtain the maximum aerodynamic efficiency for the turbine, with a relative velocity (Vr) defining a zero or negative angle with respect to a radial direction of the rotor (R).

2. The system according to claim 1, wherein said processing means are further configured to control said turbine according to at least one of the following further operating conditions of the turbocharger system:

- the internal combustion engine supplies low or medium power at a low or medium rpm, a sharp increase in torque being required of it: the sliding wall (W) is controlled to reduce the efflux section of the stator (S), and the stator vanes (V) are very angled, i.e., are almost perpendicular to the longitudinal development of a rotor blade (J) to have the maximum energy exchange between the exhaust gases and the rotor (R);
- the internal combustion engine is in a steady-state operating condition: the sliding wall (W) is controlled to be in an opening position such as to guarantee the minimum energy necessary for the compression of exhaust gases for supplying the turbine, and the stator vanes (V) are oriented to maximize the aerodynamic efficiency of the turbine (T), which, in turn, guarantees the internal combustion engine a minimum backpressure, and wherein a vector of a relative velocity (Vr) according to the known velocity triangles defines a positive angle with respect to a radial direction of the rotor;
- the internal combustion engine runs at a high rpm so that also the turbine is at full rpm, and consequently its velocity of rotation must be limited to prevent any damage to the turbine (T): the sliding wall (W) is controlled to be in an opening position to guarantee the minimum energy necessary for the compression of the exhaust gases for supplying the turbine, and the stator vanes (V) are angled to obtain the maximum aerodynamic efficiency of the turbine, with a relative velocity (Vr) according to the known velocity triangles that defines a zero or negative angle with respect to a radial direction of the rotor (R);

3. The turbocharger system according to claim 1, wherein said stator vanes (V) are shaped and mutually spaced and are orientable within a certain range so that a variation of orientation of said stator vanes causes a maximum variation smaller than 10% of an efflux section of said stator.

4. The turbocharger system according to claim 1, wherein each of said hollow seats (H) is shaped like a right prism with circular or quasi-circular or elliptical base when said seats are separate or else interpenetrate, respectively.

5. The turbocharger system according to claim 1, wherein said first control means comprise:

- a shaft (AV) coaxial with an axis of rotation (Xi) of a corresponding vane;
- a support ring (RG) comprising a plurality of through holes (H1), each of which, by co-operating with a respective shaft (AV), defines a rotation hinge for a respective stator vane (V) according to said respective axis of rotation (Xi).

6. The turbocharger system according to claim 5, wherein a crankshaft (LV) is associated to said shaft (AV), the crankshaft finding in the shaft a rotation fulcrum, and wherein a free end of said crankshaft co-operates with a ring (TRG) which rotates with respect to said axis of symmetry (X) and is axially fixed, so that a rotation of said rotatable ring (TRG) determines a variation of orientation of said stator vanes (V).

7. A method for controlling a turbocharger supercharging system of an internal combustion engine according to any one of the claims 1 to 6, including the step of controlling of the sliding wall (W) to reduce the efflux section down to a predefined limit threshold, and control of the stator vanes (V), which are oriented to obtain the maximum aerodynamic efficiency for the turbine, with a relative velocity (Vr) defining a zero or negative angle with respect to a radial direction of the rotor (R), said control being carried out in response to a condition where the internal combustion engine is operated in engine brake mode.

8. Method according to claim 7, further including at least one of the following steps:

- controlling of the sliding wall (W) to reduce the efflux section of the stator (S), and control of the stator vanes (V) by orienting them in a very angled way, i.e., almost perpendicular to the longitudinal development of a rotor blade (J), to have the maximum energy exchange between the exhaust gases and the rotor (R), said control being carried out in response to a sharp increase in torque, while the internal combustion engine is supplying low or medium power with a low or medium rpm;

- controlling of the sliding wall (W) in an opening position to guarantee the minimum energy necessary for the compression of exhaust gases for supplying the turbine, and control of the stator vanes (V) by orienting them to maximize the aerodynamic efficiency of the turbine (T) so that a vector of a relative velocity (Vr), according to the known velocity triangles, defines a positive angle with respect to a radial direction of the rotor, said control being carried out in response to a steady-state operating condition of the internal combustion engine;

- controlling of the sliding wall (W) in an opening position to guarantee the minimum energy necessary for the compression of the exhaust gases for supplying the turbine, and control of the stator vanes (V) by orienting them to obtain the maximum aerodynamic efficiency of the turbine, with a relative velocity (Vr), according to the known velocity triangles, that defines a zero or negative angle with respect to a radial direction of the rotor (R), the control being carried out in response to a condition where the internal combustion engine runs at a high rpm and the velocity of rotation of the turbine must be limited to prevent any damage to the turbine (T);

9. A control method according to claim 7 or 8, wherein a modulus of a velocity of efflux (Va) of exhaust gases through said stator is calculated according to the known formula of the isentropic efflux velocity, and wherein the velocity of rotation of the rotor (R) is calculated by an rpm sensor associated to the turbine (T) or else indirectly on the basis of the upstream and downstream pressure and of the temperature downstream of the compressor, when the compressor wheel is stably connected and aligned with the rotor (R) of the turbine (T) .

10. A land vehicle equipped with a turbocharger system according to any one of claims 1 - 6.

**Patentansprüche**

1. Turboladersystem, das Folgendes umfasst:

- eine Brennkraftmaschine und einen Turbolader, der Folgendes umfasst:

- eine Turbine, die durch die Abgase der Brennkraftmaschine angetrieben wird, wobei die Turbine eine veränderliche Geometrie besitzt, die von einem Zentripetal/Radial-Typ ist, der eine Symmetrieachse (X) definiert und einen Rotor (R), der mit entsprechenden Rotorschaufeln (J) ausgerüstet ist, die radial angeordnet sind, und einen Stator (S), der mit entsprechenden Statorplatten (V) ausgerüstet ist, die in Umfangsrichtung und radial außerhalb der Rotorschaufeln angeordnet sind, aufweist, wobei die Statorplatten (V) orientierbar sind und eine zu dem Stator koaxiale ringförmige, zylindrische Gleitwand aufweisen, die axial gleitet, um einen Abflussquerschnitt der Statorplattenturbine zu verändern, wobei die Gleitwand einen hohlen Sitz (H) für jede der Statorplatten (V) aufweist, der in Dickenrichtung der Gleitwand ausgebildet ist, um die Statorplatten während der Gleitbewegung wenigstens teilweise zu umschließen, und wobei das Turboladersystem in jedem der hohlen Sitze eine Buchse (B) umfasst, die eine zu dem hohlen Sitz (H) komplementäre äußere Form besitzt und dem hohlen Sitz drehbar zugeordnet ist, und wobei die Buchse einen inneren Schlitz (F) besitzt, der eine zu einer der Statorplatten (V) komplementäre Form besitzt, so dass die Platte darin axial gleiten kann; wobei die Turbine ferner erste Mittel zum Steuern der Orientierung der Statorplatten (V) und zweite Mittel zum Steuern einer axialen Position der Gleitwand umfasst, **gekennzeichnet durch** Verarbeitungsmittel, die konfiguriert sind, die Turbine in der Weise zu steuern, dass im Maschinenbremsbetrieb der Brennkraftmaschine die Gleitwand (W) gesteuert wird, um den Abflussquerschnitt zu verkleinern und den Gegendruck der Brennkraftmaschine bis zu einem im Voraus definierten Grenzschwellenwert zu erhöhen, und die Statorplatten (V) so orientiert sind, dass der maximale aerodynamische Wirkungsgrad für die Turbine mit einer Relativgeschwindigkeit (Vr), die einen Nullwinkel oder einen negativen Winkel in Bezug auf eine radiale Richtung des Rotors (R) definiert, erhalten wird.

2. System nach Anspruch 1, wobei die Verarbeitungsmittel ferner konfiguriert sind, die Turbine in Übereinstimmung mit wenigstens einer der folgenden weiteren Betriebsbedingungen des Turboladersystems zu steuern:

- die Brennkraftmaschine liefert eine geringe oder mittlere Leistung bei einer niedrigen oder mittleren Drehzahl, wobei von ihr eine scharfe Zunahme des Drehmoments gefordert wird: die Gleitwand (W) wird gesteuert, um den Abflussquerschnitt des Stators (S) zu verringern, und die Statorplatten (V) sind stark angewinkelt, d. h. sie sind zu der longitudinalen Entwicklung einer Rotorschaufel (J) nahezu senkrecht, um den maximalen Energieaustausch zwischen den Abgasen und dem Rotor (R) zu erhalten;

- die Brennkraftmaschine ist in einer stationären Betriebsbedingung: die Gleitwand (W) wird so gesteuert, dass sie in einer geöffneten Position ist, um die minimale Energie, die für die Verdichtung von Abgasen für die Versorgung der Turbine notwendig ist, zu gewährleisten, und die Statorplatten (V) sind so orientiert, dass der aerodynamische Wirkungsgrad der Turbine (T) maximal wird, was seinerseits einen minimalen Gegendruck der Brennkraftmaschine gewährleistet, wobei ein Vektor einer Relativgeschwindigkeit (Vr) gemäß den bekannten Geschwindigkeitsdreiecken einen positiven Winkel in Bezug auf eine radiale Richtung des Rotors definiert;

- die Brennkraftmaschine läuft bei hoher Drehzahl, so dass auch die Turbine bei voller Drehzahl läuft, weshalb ihre Drehgeschwindigkeit begrenzt werden muss, um jegliche Beschädigung der Turbine (T) zu verhindern: die Gleitwand (W) wird so gesteuert, dass sie in einer geöffneten Position ist, um die minimale Energie, die für die Verdichtung von Abgasen für die Versorgung der Turbine erforderlich ist, zu gewährleisten, und die Statorplatten (V) sind angewinkelt, um den maximalen aerodynamischen Wirkungsgrad der Turbine mit einer Relativgeschwindigkeit (Vr) gemäß den bekannten Geschwindigkeitsdreiecken, die einen Nullwinkel oder einen negativen Winkel in Bezug auf eine radiale Richtung des Rotors (R) definiert, zu erhalten.

3. Turboladersystem nach Anspruch 1, wobei die Statorplatten (V) geformt und voneinander beabstandet und innerhalb eines bestimmten Bereichs orientierbar sind, derart, dass eine Änderung der Orientierung der Statorplatten eine maximale Änderung, die kleiner als 10 % eines Abflussquerschnitts des Stators ist, hervorruft.

4. Turboladersystem nach Anspruch 1, wobei jeder der hohlen Sitze (H) wie ein gerades Prisma mit kreisförmiger oder fast kreisförmiger oder elliptischer Grundfläche geformt ist, wenn die Sitze voneinander getrennt sind bzw. ineinander eindringen.

5. Turboladersystem nach Anspruch 1, wobei die ersten Steuermittel Folgendes umfassen:

- eine Welle (AV), die zu einer Drehachse (Xi) einer entsprechenden Platte koaxial ist;
einen Tragring (RG), der mehrere Durchgangslöcher (H1) aufweist, wovon jedes durch Zusammenwirkung mit einer entsprechenden Welle (AV) ein Drehgelenk für eine entsprechende Statorplatte (V) entsprechend der jeweiligen Drehachse (Xi) definiert.

6. Turboladersystem nach Anspruch 5, wobei der Welle (AV) eine Kurbelwelle (LV) zugeordnet ist, wobei die Kurbelwelle in der Welle einen Drehpunkt findet und wobei ein freies Ende der Kurbelwelle mit einem Ring (TRG) zusammenwirkt, der sich in Bezug auf die Symmetrieachse (X) dreht und axial fest ist, so dass eine Drehung des drehbaren Rings (TRG) eine Änderung der Orientierung der Statorplatten (V) bestimmt.

7. Verfahren zum Steuern eines Turbolader-Aufladesystems einer Brennkraftmaschine nach einem der Ansprüche 1 bis 6, das den Schritt des Steuerns der Gleitwand (W), um den Abflussquerschnitt auf einen im Voraus definierten Grenzschwellenwert zu verringern, und des Steuerns der Statorplatten (V), die so orientiert sind, dass für die Turbine der maximale aerodynamische Wirkungsgrad mit einer Relativgeschwindigkeit (Vr), die einen Nullwinkel oder einen negativen Winkel in Bezug auf eine radiale Richtung des Rotors (R) definiert, erhalten wird, umfasst, wobei die Steuerung in Reaktion auf eine Bedingung ausgeführt wird, unter der die Brennkraftmaschine in einem Maschinenbremsbetrieb betrieben wird.

8. Verfahren nach Anspruch 7, das ferner wenigstens einen der folgenden Schritte umfasst:

- Steuern der Gleitwand (W), um den Abflussquerschnitt des Stators (S) zu verringern und um die Statorplatten (V) zu steuern, indem sie stark angewinkelt orientiert werden, d. h. zu der longitudinalen Entwicklung einer Rotorschaufel (J) nahezu senkrecht sind, um zwischen den Abgasen und dem Rotor (R) den maximalen Energieaustausch zu erzielen, wobei die Steuerung in Reaktion auf eine scharfe Zunahme des Drehmoments ausgeführt wird, während die Brennkraftmaschine eine geringe oder mittlere Leistung bei einer niedrigen oder mittleren Drehzahl liefert;

- Steuern der Gleitwand (W) in eine geöffnete Position, um die minimale Energie, die für die Verdichtung von Abgasen für die Versorgung der Turbine erforderlich ist, zu gewährleisten, und Steuern der Statorplatten (V), indem sie so orientiert werden, dass der aerodynamische Wirkungsgrad der Turbine (T) maximal wird, so dass ein Vektor einer Relativgeschwindigkeit (Vr) gemäß den bekannten Geschwindigkeitsdreiecken einen positiven Winkel in Bezug auf eine radiale Richtung des Rotors definiert, wobei die Steuerung in Reaktion auf eine stationäre Betriebsbedingung der Brennkraftmaschine ausgeführt wird;

- Steuern der Gleitwand (W) in eine geöffnete Position, um die minimale Energie, die für die Verdichtung der Abgase für die Versorgung der Turbine erforderlich ist, zu gewährleisten, und Steuern der Statorplatten (V), indem sie so orientiert werden, dass der maximale aerodynamische Wirkungsgrad der Turbine mit einer Relativgeschwindigkeit (Vr) gemäß den bekannten Geschwindigkeitsdreiecken, die einen Nullwinkel oder einen negativen Winkel in Bezug auf eine radiale Richtung des Rotors (R) definiert, erhalten wird, wobei die Steuerung in Reaktion auf eine Bedingung ausgeführt wird, gemäß der die Brennkraftmaschine mit hoher Drehzahl läuft und die Drehgeschwindigkeit der Turbine begrenzt werden muss, um jegliche Beschädigung der Turbine (T) zu verhindern.

**9.** Steuerverfahren nach Anspruch 7 oder 8, wobei ein Modul einer Ausflussgeschwindigkeit (Va) von Abgasen durch den Stator in Übereinstimmung mit den bekannten Formeln für die isentropische Abflussgeschwindigkeit berechnet wird und wobei die Drehgeschwindigkeit des Rotors (R) durch einen Drehzahlsensor, der der Turbine (T) zu geordnet ist, oder andernfalls indirekt auf der Grundlage des stromaufseitigen und des stromabseitigen Drucks und anhand der Temperatur stromabseits des Kompressors berechnet wird, wenn das Kompressorrad mit dem Rotor (R) der Turbine (T) stabil verbunden und darauf ausgerichtet ist.

**10.** Bodenfahrzeug, das mit einem Turboladersystem nach einem der Ansprüche 1-6 ausgerüstet ist.

**Revendications**

**1.** Système de turbochargeur comprenant :

- un moteur à combustion interne et un turbochargeur comprenant :
- une turbine qui est guidée par les gaz d'échappement dudit moteur à combustion interne, dans lequel ladite turbine présente une géométrie variable qui est d'un type radial centripète qui définit un axe de symétrie (X) et comprend un rotor (R) qui est équipé de pales de rotor correspondantes (J), lesquelles pales sont agencées radialement, et un stator (S) qui est équipé d'aubes de stator correspondantes (V), lesquelles aubes sont agencées de façon circonférentielle, radialement et de façon externe par rapport aux pales de rotor, et dans lequel lesdites aubes de stator (V) peuvent être orientées, et comprenant une paroi coulissante cylindrique annulaire qui est coaxiale par rapport au stator, laquelle paroi coulisse axialement pour faire varier une section de flux sortant de ladite turbine à aubes de stator, dans lequel ladite paroi coulissante comprend un siège creux (H) pour chacune desdites aubes de stator (V), lequel siège est formé dans l'épaisseur de la paroi coulissante, de manière à englober au moins partiellement lesdites aubes de stator pendant ledit déplacement de coulissement et dans lequel le système de turbocharger comprend, dans chacun desdits sièges creux, une douille (B), laquelle douille présente une forme externe qui est complémentaire par rapport à celle dudit siège creux (H) et est associée à rotation audit siège creux, et dans lequel ladite douille comporte une fente interne (F) qui présente une forme qui est complémentaire par rapport à celle de l'une desdites aubes de stator (V) de telle sorte que ladite aube puisse coulisser axialement en son sein ; la turbine comprenant en outre un premier moyen pour commander une orientation desdites aubes de stator (V) et un second moyen pour commander une position axiale de ladite paroi coulissante et étant **caractérisée en ce qu'**elle comprend un moyen de traitement qui est configuré pour commander ladite turbine de telle sorte que, dans un fonctionnement de mode à frein moteur du moteur à combustion interne, la paroi coulissante (W) soit commandée pour réduire la section de flux sortant et pour augmenter la contre-pression du moteur à combustion interne jusqu'à un seuil de limite prédéfini, et les aubes de stator (V) sont orientées de manière à obtenir le rendement aérodynamique maximum pour la turbine, selon une vitesse relative (Vr) qui définit un angle de zéro ou négatif par rapport à une direction radiale du rotor (R).

**2.** Système selon la revendication 1, dans lequel ledit moyen de traitement est en outre configuré pour commander ladite turbine en fonction d'au moins l'une des autres conditions de fonctionnement qui suivent du système de turbochargeur :

- le moteur à combustion interne fournit une puissance faible ou intermédiaire pour un nombre de tours par minute tpm faible ou intermédiaire, une augmentation nette de couple étant requise de sa part : la paroi coulissante (W) est commandée pour réduire la section de flux sortant du stator (S), et les aubes de stator (V) sont très angulées, c'est-à-dire qu'elles sont pratiquement perpendiculaires au développement longitudinal d'une pale de rotor (J) de manière à disposer d'un échange d'énergie maximum entre les gaz d'échappement et le rotor (R) ;

- le moteur à combustion interne est dans une condition de fonctionnement en régime établi : la paroi coulissante (W) est commandée pour être dans une position d'ouverture de manière à garantir l'énergie minimum qui est nécessaire pour la compression de gaz d'échappement pour alimenter la turbine, et les aubes de stator (V) sont orientées de manière à maximiser le rendement aérodynamique de la turbine (T), ce qui, à son tour, garantit au moteur à combustion interne une contre-pression minimum, et dans lequel un vecteur d'une vitesse relative (Vr) en fonction des triangles de vitesse connus définit un angle positif par rapport à une direction radiale du rotor ; et

- le moteur à combustion interne fonctionne à un nombre de tours par minute tpm élevé de sorte que la turbine est également à un nombre de tours par minute de plein régime et par conséquent, sa vitesse de rotation doit être limitée pour empêcher un quelconque endommagement au niveau de la turbine (T) : la paroi coulissante (W) est commandée pour être dans une position d'ouverture pour garantir l'énergie minimum qui est nécessaire pour la compression des gaz d'échappement pour alimenter la turbine, et les aubes de stator (V) sont angulées pour obtenir le rendement aérodynamique maximum de la turbine, selon une vitesse relative (Vr) en fonction des triangles de vitesse connus qui définit un angle de zéro ou négatif par rapport à une direction radiale du rotor (R).

3. Système de turbochargeur selon la revendication 1, dans lequel lesdites aubes de stator (V) sont conformées et mutuellement espacées et peuvent être orientées à l'intérieur d'une certaine plage de telle sorte qu'une variation de l'orientation desdites aubes de stator génère une variation maximum inférieure à 10 % d'une section de flux sortant dudit stator.

4. Système de turbochargeur selon la revendication 1, dans lequel chacun desdits sièges creux (H) est conformé de façon similaire à un prisme droit qui comporte une base circulaire ou quasi-circulaire ou elliptique lorsque lesdits sièges sont séparés ou sinon s'interpénètrent, respectivement.

5. Système de turbochargeur selon la revendication 1, dans lequel ledit premier moyen de commande comprend :

   - un arbre (AV) qui est coaxial par rapport à un axe de rotation (Xi) d'une aube correspondante ; et
   - une bague de support (RG) qui comprend une pluralité de trous traversants (H1) dont chacun, en coopérant avec un arbre respectif (AV), définit une charnière de rotation pour une aube de stator respective (V) en fonction dudit axe de rotation respectif (Xi).

6. Système de turbochargeur selon la revendication 5, dans lequel un vilebrequin (LV) est associé audit arbre (AV), le vilebrequin trouvant dans l'arbre un point d'appui en termes de rotation, et dans lequel une extrémité libre dudit vilebrequin coopère avec une bague (TRG) qui est entraînée en rotation par rapport audit axe de symétrie (X) et qui est fixe axialement, de telle sorte qu'une rotation de ladite bague pouvant être entraînée en rotation (TRG) détermine une variation de l'orientation desdites aubes de stator (V).

7. Procédé pour commander un système de supercharge ment par turbochargeur d'un moteur à combustion interne selon l'une quelconque des revendications 1 à 6, incluant l'étape de commande de la paroi coulissante (W) pour réduire la section de flux sortant jusqu'à un seuil de limite prédéfini, et la commande des aubes de stator (V) qui sont orientées de manière à obtenir le rendement aérodynamique maximum pour la turbine, selon une vitesse relative (Vr) qui définit un angle de zéro ou négatif par rapport à une direction radiale du rotor (R), ladite commande étant mise en œuvre en réponse à une condition selon laquelle le moteur à combustion interne est actionné dans un mode à frein moteur.

8. Procédé selon la revendication 7, incluant en outre au moins l'une des étapes qui suivent :

   - la commande de la paroi coulissante (W) pour réduire la section de flux sortant du stator (S) et la commande des aubes de stator (V) en les orientant d'une façon très angulée, c'est-à-dire pratiquement perpendiculairement au développement longitudinal d'une pale de rotor (J), de manière à disposer de l'échange d'énergie maximum entre les gaz d'échappement et le rotor (R), ladite commande étant mise en œuvre en réponse à une augmentation nette du couple, tandis que le moteur à combustion interne est en train de fournir une puissance faible ou intermédiaire selon un nombre de tours par minute tpm faible ou intermédiaire ;
   - la commande de la paroi coulissante (W) dans une position d'ouverture pour garantir l'énergie minimum qui est nécessaire pour la compression des gaz d'échappement pour alimenter la turbine, et la commande des aubes de stator (V) en les orientant afin de maximiser le rendement aérodynamique de la turbine (T) de telle sorte qu'un vecteur d'une vitesse relative (Vr), en fonction des triangles de vitesse connus, définisse un angle positif par rapport à une direction radiale du rotor, ladite commande étant mise en œuvre en réponse à une condition de fonctionnement en régime établi du moteur à combustion interne ; et

- la commande de la paroi coulissante (W) dans une position d'ouverture pour garantir l'énergie minimum qui est nécessaire pour la compression des gaz d'échappement pour alimenter la turbine, et la commande des aubes de stator (V) en les orientant pour obtenir le rendement aérodynamique maximum de la turbine, selon une vitesse relative (Vr), en fonction des triangles de vitesse connus, qui définit un angle de zéro ou négatif par rapport à une direction radiale du rotor (R), la commande étant mise en œuvre en réponse à une condition selon laquelle le moteur à combustion interne fonctionne à un nombre de tours par minute tpm élevé et la vitesse de rotation de la turbine doit être limitée pour empêcher un quelconque endommagement au niveau de la turbine (T).

9. Procédé de commande selon la revendication 7 ou 8, dans lequel un module d'une vitesse de flux sortant (Va) des gaz d'échappement au travers dudit stator est calculé en fonction de la formule connue de la vitesse de flux sortant isentrope, et dans lequel la vitesse de rotation du rotor (R) est calculée par un capteur de nombre de tours par minute tpm qui est associé à la turbine (T) ou sinon de façon indirecte sur la base de la pression amont et aval et de la température en aval du compresseur, lorsque la roue de compresseur est connectée et alignée de façon stable avec le rotor (R) de la turbine (T).

10. Véhicule terrestre équipé d'un système de turbochargeur selon l'une quelconque des revendications 1 à 6.

Fig. 1 (prior art)

GAS

H1

W

X

Fig. 2

S

GAS

Fig. 3

Fig. 4a

Fig. 4b

Fig. 4c

Fig. 5

Fig. 6

Fig. 6a

Fig. 7

Fig. 7a

Fig. 8

Fig. 8a

Va

Vp

Vr

Clr

Clt

T

Fig. 9

TRG

J

W

Fig. 9a

Va

Vr

Vp

Clr

Clt

T

Fig. 10

TRG  J

W

Fig. 10a

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008052088
- JP 2010156220 B

- DE 102009012130